# FASCICULE DE BREVET EUROPEEN

(11) **EP 0 970 552 B1**
(45) Date de publication et mention de la délivrance du brevet: **10.10.2001**
(21) Numéro de dépôt: 98917228.3
(22) Date de dépôt: 25.03.1998
(51) Int. Cl.: H02B 1/20, H02B 1/32

(54) **CHASSIS DE CABLAGE ELECTRIQUE**
RAHMEN FÜR ELEKTRISCHE VERDRAHTUNG
ELECTRICAL WIRING FRAME

(30) Priorité: 27.03.1997 FR 9704169
(43) Date de publication de la demande: 12.01.2000
(73) Titulaire: Faccin, Gino, 68440 Zimmersheim (FR)
(72) Inventeur: Faccin, Gino, 68440 Zimmersheim (FR)
(74) Mandataire: Nithardt, Roland
(86) Numéro de dépôt international: FR9800599
(87) Numéro de publication internationale: WO9844609

(56) Documents cités:
- EP-A- 0 352 149
- FR-A- 2 233 731
- FR-A- 2 433 886
- FR-A- 2 682 229

## Description

La présente invention concerne un châssis de câblage électrique destiné à recevoir des appareils électriques et leur câblage électrique, ce chàssis comportant au moins deux montants verticaux disposés dans des plans parallèles et au moins un rail horizontal couplé aux montants verticaux par au moins deux étriers de forme générale en oméga, la base des étriers déterminant l'écartement du rail horizontal par rapport aux montants verticaux, l'espace intérieur défini par ces étriers étant utilisé comme une goulotte de câbles, le rail horizontal étant pourvu d'un support normalisé destiné à recevoir les appareils électriques et d'au moins un peigne pince-fils disposé parallèlement au support agencé pour fixer en position les câbles électriques connectés auxdits appareils électriques.

Ce type de châssis de câblage est bien connu et généralement utilisé dans les armoires électriques de commande. Il permet d'organiser le câblage d'une façon ordonnée, claire et propre, les câbles étant positionnés dans les peignes pince-fils et regroupés dans les goulottes latérales formées par les étriers en forme d'oméga. Le câblage est grandement facilité, de même que l'accès aux appareils électriques et à leurs câbles. Néanmoins, les châssis connus sont réalisés au moyen de profilés assemblés par des systèmes vis-écrous qui nécessitent des temps de montage relativement longs et un outillage adapté. Ces temps de montage sont doublés quand il faut modifier ou adapter la position des montants et des rails l'un par rapport à l'autre. Par ailleurs, l'entraxe entre deux rails horizontaux consécutifs n'est pas réglable en continu étant donné que les trous de fixation sont prévus à intervalle régulier. Il n'est donc pas toujours possible de réaliser une implantation optimale de l'armoire électrique. De plus, le nombre de pièces nécessaires pour réaliser ce type de châssis est relativement élevé compte tenu des multiples variantes envisageables.

La présente invention se propose d'améliorer les châssis actuellement connus en proposant un système d'assemblage qui soit rapide, simple et sans outillage permettant de réduire considérablement les coûts et les temps de montage. De plus, ce système d'assemblage permet de modifier et d'adapter à loisir la position des pièces l'une par rapport à l'autre, de modifier leurs entraxes d'une manière continue, notamment en les faisant coulisser les unes par rapport aux autres, et de moduler l'architecture du châssis en fonction des besoins. Les pièces composant ce châssis ont été étudiées pour s'adapter à différentes variantes de manière à limiter leur nombre et donc le coût de fabrication de l'ensemble.

Ce but est atteint par un châssis tel que défini en préambule et caractérisé en ce que l'assemblage des étriers sur les montants verticaux, du rail horizontal sur les étriers, du support et du peigne pince-fils sur le rail horizontal est un assemblage par emboîtement et verrouillage, démontable, les éléments à assembler mutuellement comportant respectivement des moyens d'emboîtement et de verrouillage complémentaires agencés pour coopérer entre eux.

Ces moyens d'emboîtement et de verrouillage complémentaires peuvent être agencés pour coopérer entre eux en rapprochant lesdits éléments selon un mouvement de translation perpendiculaire auxdits éléments et/ou selon un mouvement de rotation.

Dans une forme de réalisation préférée de l'invention, le montant vertical est formé d'un profilé dont un côté comporte sur un des bords un pivot arrondi et sur l'autre bord une rainure. Ce montant vertical peut présenter une section générale sensiblement carrée, symétrique par rapport à un plan médian parallèle audit côté pourvu du pivot et de la rainure.

Dans la forme de réalisation préférée, l'étrier comporte, sur sa branche disposée du côté du montant vertical, une projection extérieure formant un crochet arrondi agencé pour s'emboîter sur le pivot prévu sur ledit montant vertical et une extrémité libre recourbée vers l'extérieur formant une languette élastique pourvue d'un nez agencé pour se verrouiller dans la rainure prévue sur ledit montant vertical par emboîtement après rotation de l'étrier autour dudit pivot, l'écartement entre le crochet et le nez étant inférieure ou égale à l'écartement entre le pivot et la rainure, l'étrier et/ou le montant vertical comportant, dans la zone d'emboîtement, des reliefs agencés pour former des butées.

L'étrier comporte avantageusement sur sa branche disposée du côté du montant vertical au moins un trou destiné à recevoir un organe de fixation monté coulissant dans une rainure prévue dans le montant vertical et agencé pour bloquer la position dudit étrier.

Cet étrier comporte également, sur sa branche disposée du côté du rail horizontal, une extrémité libre recourbée vers l'extérieur, formant un angle d'environ 90° avec sa branche et pourvue d'une rainure.

De préférence, le rail horizontal est formé d'un profilé comportant en face arrière une rainure longitudinale en forme de C, l'extrémité libre d'une des branches étant recourbée et portant un bourrelet agencé pour s'emboîter sur un premier bord de la branche correspondante dudit étrier et l'extrémité libre de l'autre branche formant une languette élastique pourvue d'un nez agencé pour se verrouiller sur le second bord de la branche correspondante dudit étrier par emboîtement après rotation dudit rail horizontal autour dudit premier bord, l'écartement entre les deux branches de la rainure en forme de C étant au plus égal à la largeur de la branche de l'étrier, l'étrier et/ou le rail horizontal comportant, dans la zone d'emboîtement, des reliefs agencés pour former des butées. Ce rail horizontal comporte également en face avant une rainure longitudinale en forme de T renversé.

Dans la forme de réalisation préférée, le support est formé d'un profilé et comporte en face arrière deux pattes d'accrochage élastiques et un bossage, les pattes étant agencées pour s'emboîter dans la rainure en forme de T prévue dans la face avant du rail horizontal après un mouvement de rotation autour du bossage en appui sur ledit rail, l'extrémité de l'une des pattes étant recourbée pour appuyer sur le fond de la rainure et l'extrémité de l'autre patte ayant un crochet pour se verrouiller à l'arriére du bord libre correspondant de ladite rainure, la distance extérieure définie par les deux pattes étant au moins égale à l'écartement entre les deux bords libres de la rainure et la distance entre le bossage et le crochet de la patte étant au plus égale à l'épaisseur dudit bord libre.

D'une manière avantageuse, le rail horizontal comporte, sur ses bords longitudinaux, au moins une rainure longitudinale en forme de U pourvue d'au moins un évidement longitudinal dans une de ses branches et le peigne pince-fils comporte un pied d'accrochage pourvu de deux languettes élastiques dont l'une porte un cran destiné à se verrouiller dans l'évidement longitudinal prévu dans ladite rainure en U par emboîtement du pied après une translation du peigne pince-fils en direction du rail horizontal.

Ce peigne pince-fils comporte de préférence un prolongement arrière terminé par un talon destiné à s'emboîter sur la partie arrière du rail horizontaL l'écartement entre le talon et le pied d'accrochage étant inférieure ou égale à la largeur dudit rail dans la zone d'emboîtement.

Le peigne pince-fils comporte également une pluralité de dents parallèles entre elles, chaque dent comportant sur ses flancs au moins une alvéole formant entre deux dents consécutives un logement pour recevoir et maintenir en position un câble électrique.

Dans la forme de réalisation préférée, le châssis comporte un cache isolant destiné à recouvrir au moins partiellement ledit étrier et comportant au moins une grande branche couplée à la branche disposée du côté du montant vertical et pourvue sur son extrémité libre d'une rainure.

Ce châssis peut également comporter au moins un couvercle agencé pour recouvrir l'intervalle existant entre deux châssis disposés côte à côté, ledit couvercle comportant sur ses bords longitudinaux au moins une rainure agencée pour s'emboîter sur les extrémités libres correspondantes des branches de l'étrier et du cache isolant.

De préférence, ce couvercle comporte au moins dans une zone centrale des ondulations longitudinales déformables agencées pour adapter la largeur du couvercle à l'intervalle existant entre les deux châssis et pour rattraper la différence de niveaux entre les deux châssis.

Pour fermer les côtés dudit châssis, ce dernier comporte avantageusement au moins un flasque latéral comportant sur ses bords longitudinaux au moins une rainure agencée pour s'emboîter sur les extrémités libres des branches correspondantes de l'étrier et du cache isolant.

Les montants verticaux, les rails horizontaux, les étriers et les supports peuvent être réalisés par extrusion dans un matériau choisi parmi le groupe comportant de l'aluminium, de l'alliage d'aluminium, de l'inox, de l'acier, des matières synthétiques.

De même, les caches isolants, les peignes pince-fils, les couvercles et les flasques latéraux peuvent être réalisés dans une matière synthétique diélectrique.

La présente invention et ses avantages apparaîtront mieux dans la description suivante d'un exemple de réalisation, en référence aux dessins annexés, dans lesquels :
- les figures 1 A à F représentent les différentes étapes de montage d'un châssis selon l'invention,
- la figure 2 est une vue en perspective d'un châssis monté,
- la figure 3 est une vue en perspective d'un montant vertical du chàssis,
- la figure 4 est une vue en perspective d'un autre montant vertical,
- la figure 5 est une vue en perspective d'un étrier,
- la figure 6 est une vue en perspective d'un cache isolant pour un étrier,
- la figure 7 est une vue en bout d'un support monté sur un rail horizontal du châssis,
- la figure 8 est une vue en perspective d'un rail horizontal du châssis,
- la figure 9 est une vue en perspective d'un profilé support,
- la figure 10 est une vue en perspective d'un autre rail horizontal du châssis,
- les figures 11 A à D sont des vues du peigne pince-fils du châssis, respectivement en perspective, en vue de face, en vue de dessous et en vue droite,
- la figure 12 est une vue partielle d'un peigne pince-fils monté dans un rail horizontal du châssis,
- la figure 13 est une vue en perspective d'un capot entre deux peignes pince-fils,
- la figure 14 est une vue en perspective d'un couvercle entre deux châssis,
- la figure 15 est une vue partielle en perspective de deux couvercles montés sur des étriers de deux châssis adjacents,
- la figure 16 est une vue en perspective d'un flasque latéral à monter sur un étrier, et
- la figure 17 est une vue partielle en perspective d'un flasque latéral monté sur un étrier.

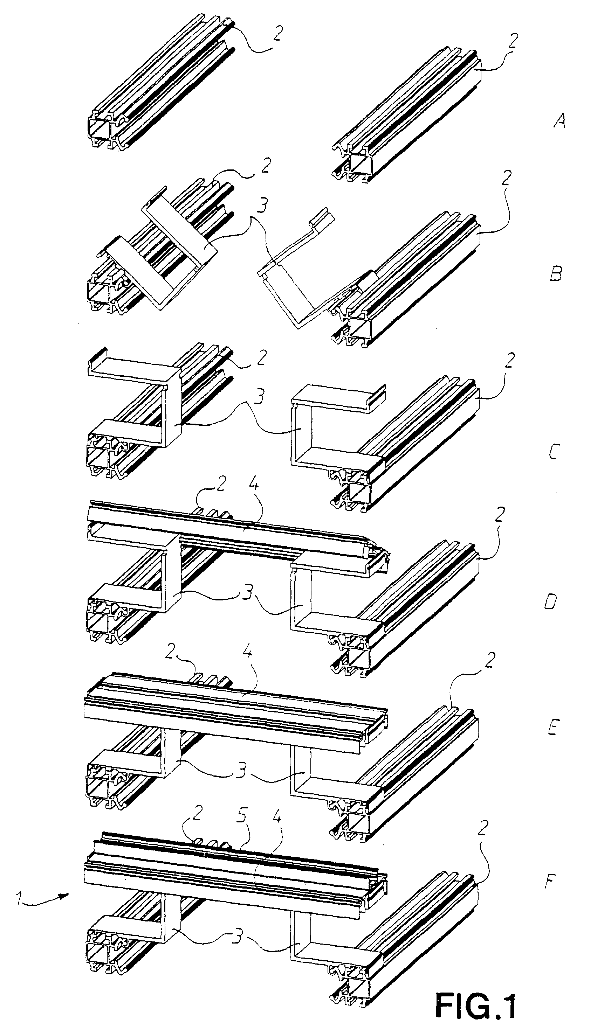

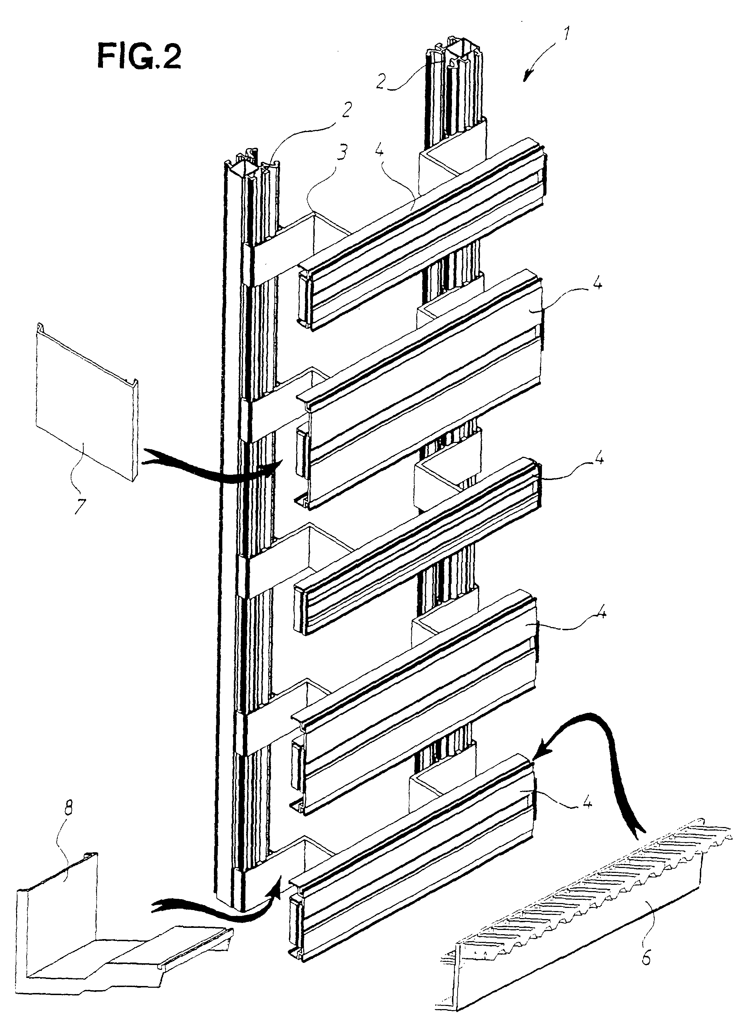

En référence aux figures 1 et 2, le châssis de câblage 1 est obtenu en assemblant différents profilés le composant selon les étapes de montage énumérées ci-dessous et conformément aux figures 1 A à F :
- figure 1A : on place deux montants verticaux 2 parallèlement, à plat ou verticalement sur une base de travail (non représentée), distants d'un intervalle prédéterminé.
- figures 1B et 1C : sur chaque montant vertical 2, on emboîte un étrier 3 en forme d'oméga destiné à recevoir un rail horizontal 4. Bien sûr, on mettra en place autant d'étriers que l'on prévoit de rails horizontaux.
- figures 1D et 1E : on emboîte ensuite sur chaque paire d'étriers 3, un rail horizontal 4 de dimensions adaptées au besoin, en longueur et en largeur.
- figure 1F : on emboîte enfin sur chaque rail horizontal 4, un support 5 destiné à recevoir des appareils électriques, tels que des commutateurs, relais, disjoncteurs, etc. Si besoin, ce support 5 peut s'étendre sur une longueur inférieure à celle du rail horizontal.
   Le châssis de câblage 1 obtenu et représenté par la figure 2 est ensuite complété par des peignes pince-fils 6 montés sur les rails horizontaux 4 et dont le rôle est de maintenir en position des câbles électriques raccordés auxdits appareils, des flasques latéraux 7 pour fermer les côtés du châssis, des caches isolants 8 montés sur les étriers 3. Si plusieurs châssis de câblage sont placés côte à côte, des couvercles 9 (décrits plus loin) sont prévus pour les relier et obturer ainsi les espaces vides. Ensuite, ce châssis 1 peut être monté dans une armoire électrique de commande (non représentée) par des moyens de fixation connus ou dans tout autre logement approprié.

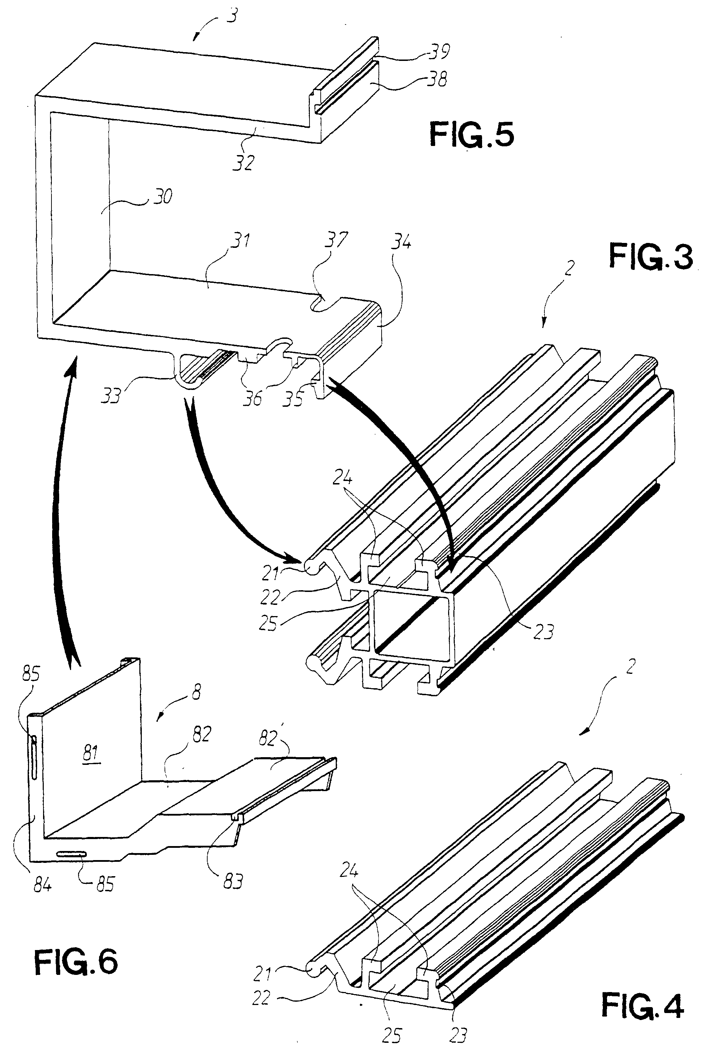

Les différents profilés mentionnés sont à présent détaillés en référence aux figures 3 à 17.

Le montant vertical 2, représenté par les figures 3 et 4, comporte un profilé plat ou de section générale carrée, ou encore d'une autre forme appropriée. Il comporte, d'un côté, sur un des bords un pivot 21 arrondi prévu à l'extrémité d'un bras 22 coudé et sur l'autre bord une rainure 23. Dans le cas d'un profilé carré, le montant vertical 2 est symétrique par rapport à son plan médian parallèle au côté pourvu du pivot 21 et de la rainure 23. Par conséquent, ce montant vertical 2 comporte un pivot 21 et une rainure 23 de chaque côté lui permettant d'être utilisable aussi bien en montant droit qu'en montant gauche.

L'étrier 3, représenté par la figure 5, comporte un profilé en forme d'oméga permettant le montage des rails horizontaux 4 sur les montants verticaux 2 et perpendiculairement à ces derniers. La base 30 de l'étrier 3 définit l'écartement des rails 4 par rapport aux montants 2 et l'espace défini entre les branches 31, 32 de l'étrier est utilisé pour y ranger les faisceaux de câbles électriques. Cet étrier 3 comporte, sur sa branche 31 disposée du côté du montant vertical 3, une projection extérieure formant un crochet arrondi 33 et une extrémité libre recourbée vers l'extérieur formant une languette 34 pourvue d'un nez 35. Le crochet 33 est destiné à s'emboîter sur le pivot 21 et le nez 35 est destiné à se verrouiller dans la rainure 23 après un mouvement de rotation de l'étrier 3 autour dudit pivot 21, grâce à la déformation élastique de la languette 34. Ce mouvement de rotation permettant l'emboîtement et le verrouillage de l'étrier 3 sur le montant vertical 2 est représenté clairement par la figure 1B. Pour assurer un assemblage rigide de ces deux pièces et éviter tout risque de déverrouillage et de déboîtement intempestifs, l'écartement prévu entre le crochet 33 et le nez 35 est au plus égal et de préférence légèrement inférieur à celui prévu entre le pivot 21 et la rainure 23, mettant sous contrainte ledit emboîtement. De même, l'étrier 3 et le montant vertical 2 comportent dans leur zone d'emboîtement des reliefs formés par des bossages ou des nervures respectivement 36 et 24 agencés pour former des butées en appui l'une contre l'autre, qui mettent également sous contrainte ledit emboîtement. L'étrier 3 comporte également deux. trous oblongs 37 opposés, prévus dans la branche 31 et destinés à recevoir des vis de blocage (non représentées) permettant de bloquer ledit étrier en position fixe sur le montant vertical 2. A cet effet, le montant vertical 2 comporte une rainure 25 en forme de T renversé et agencée pour recevoir la tête des vis de blocage ou les écrous associés à ces vis. Cette rainure 25 étant prévue sur toute la longueur du montant vertical 2, on comprend aisément que les étriers 3 peuvent être placés à n'importe quel endroit le long dudit montant. Les bords de cette rainure 25 forment également les butées 24 mentionnées plus haut. L'étrier 3 comporte également sur sa branche 32 disposée du côté du rail horizontal 4 une extrémité libre 38 recourbée vers l'extérieur et formant un angle d'environ 90° avec sa branche 32, pourvue d'une rainure 39. La conception de cet étrier 3 lui permet de pouvoir se placer aussi bien sur le montant vertical gauche que sur le montant vertical droit.

Le cache isolant 8, représenté par la figure 6, est destiné à recouvrir partiellement l'étrier 3 pour isoler électriquement les rails horizontaux 4 des montants verticaux 2. Il est réalisé dans une matière diélectrique moulée et présente une forme en L dont la petite branche 81 s'emboîte sur la base 30 et la grande branche 82 s'emboîte sur la branche 31 de l'étrier 3. Cette grande branche 82 comporte à son extrémité libre une rainure 83 qui peut recevoir le flasque latéral 7 ou le couvercle 9 comme détaillé plus loin. Ce cache isolant 8 est prolongé latéralement par des rebords 84 munis de petits ergots 85 qui s'emboîtent à l'arrière de l'étrier 3 et assurent le maintien du cache 8 sur l'étrier 3. La grande branche 82 comporte une zone surélevée 82' pour laisser un espace libre dans la zone des trous oblongs 37 pour la tête des vis de fixation ou les écrous associés à ces vis.

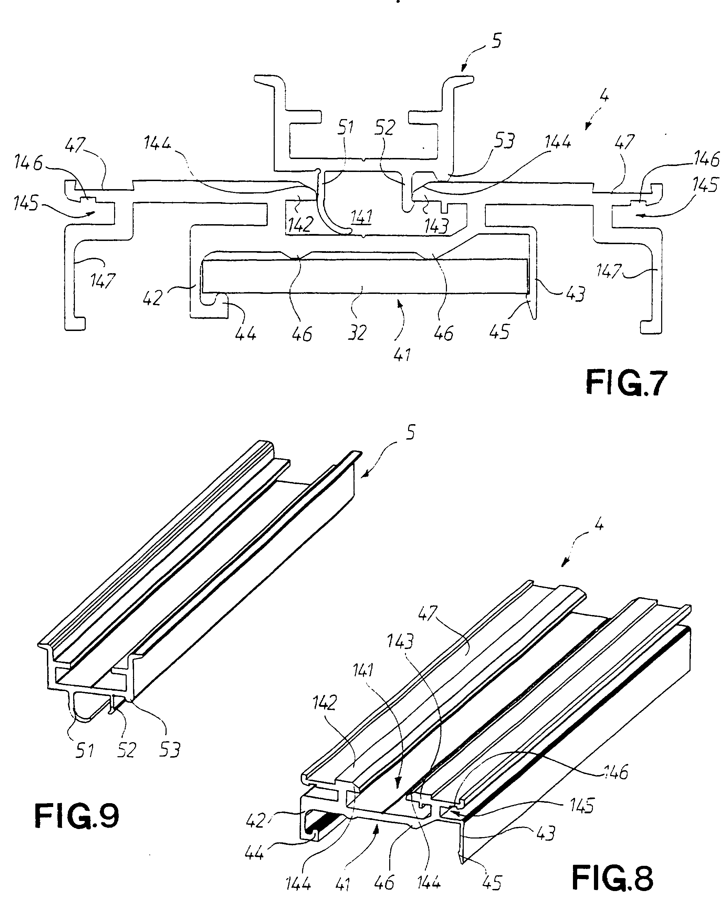

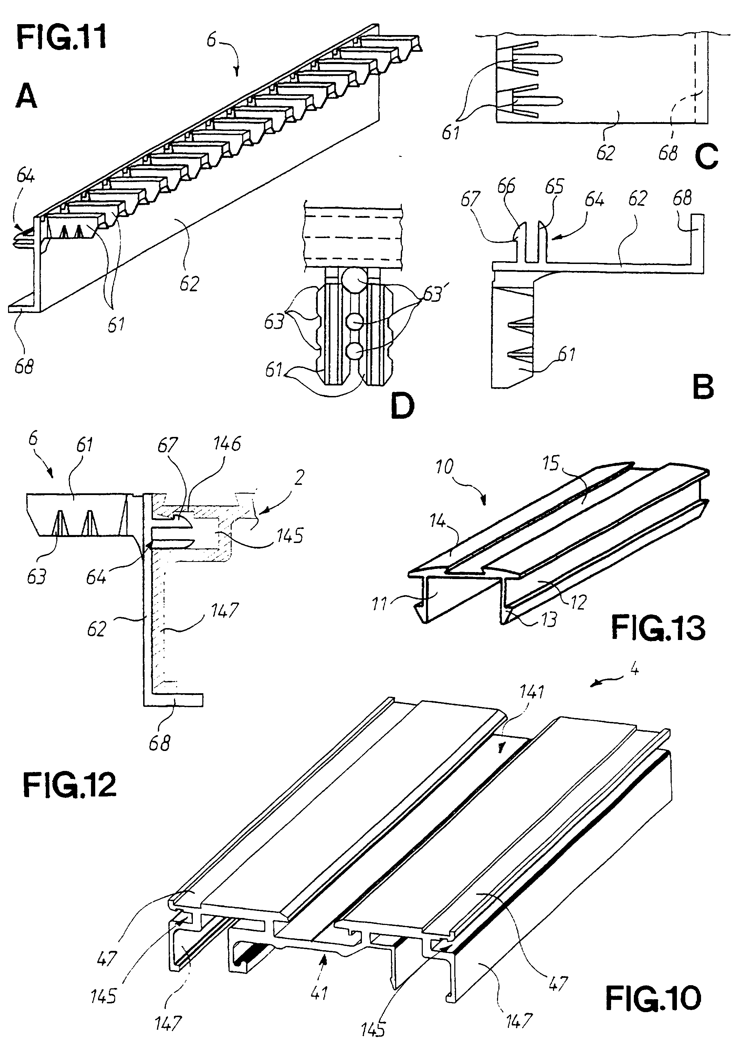

Le rail horizontal 4, représenté par les figures 7, 8 et 10, comporte, en face arrière, une rainure 41 en forme de C destinée à recevoir entre ses branches 42, 43, la branche 32 de l'étrier 3. L'extrémité libre de sa branche 42 est recourbée et comporte un bourrelet 44 et l'extrémité libre de sa branche 43 forme une languette pourvue d'un nez 45. Pour emboîter le rail horizontal 4 sur la branche 32 de l'étrier 3, on emboîte la branche 42 munie de son bourrelet 44 sur un des bords de cette branche 32 et on fait tourner le rail horizontal 4 jusqu'à emboîter l'autre bord de la branche 32 de l'étrier 3 dans la branche 43, le nez 45 verrouillant cet assemblage, grâce à l'élasticité de la languette 43. Pour assurer un assemblage rigide de ces deux pièces et éviter tout risque de déboîtement et de déverrouillage intempestifs, l'écartement prévu entre les branches 42 et 43 de la rainure 41 est au plus égal et de préférence légèrement inférieur à la largeur de la branche 32 mettant sous contrainte ledit emboîtement. De même, des bossages 46 sont prévus dans le fond de cette rainure 41 pour former des butées en appui contre la branche 32 mettant également sous contrainte ledit emboîtement. Ce rail horizontal 4 comporte sur sa face avant une rainure 141 en forme de T renversé, parallèle à la rainure 41 en forme de C, ces rainures étant disposées sensiblement dos à dos. Cette rainure 141 est destinée à recevoir le support 5, les bords libres 142 et 143 de la rainure en forme de T présentant un chanfrein 144 destiné à faciliter l'emboîtement dudit support 5. Les bords longitudinaux du rail horizontal 8 comportent également une rainure 145 en forme de U dont l'ouverture est sensiblement perpendiculaire à celles des rainures 41 et 141, la rainure 145 comportant au moins sur une de ses branches un évidement longitudinal 146 et destinée à recevoir un peigne pince-fils pour le maintien en position des câbles électriques connectés auxdits appareils électriques portés par le support 5. Ce rail horizontal 8 peut présenter des largeurs variables en fonction des besoins tout en étant compatible avec les autres profilés, les rainures 41, 141 et 145 restant identiques. Le rail horizontal 8 de la figure 8 présente une largeur moyenne tandis que celui des figures 7 et 10 présente une largeur presque double de celle du rail de la figure 8. Dans ce cas, le rail horizontal 8 comporte des bords libres longitudinaux 147 repliés vers l'arrière sensiblement parallèlement aux branches 42 et 43 de la rainure 41 en forme de C. Ce rail horizontal 4 comporte également en face avant deux rainures plates 47 parallèles disposées de part et d'autre de la rainure 141 et agencées pour recevoir des étiquettes de repérage destinées à identifier l'appareillage électrique porté par le châssis 1.

Le support 5, en référence à la figure 9, comporte un profilé normalisé en forme de U et pourvu en face arrière de deux pattes d'accrochage 51, 52 agencées pour se loger dans la rainure 141 en forme de T renversé prévue dans la face avant du rail horizontal 4. La patte 51 est plus longue que la patte 52 et son extrémité libre recourbée est destinée à prendre appui sur le fond de la rainure 141. La patte 52 comporte à son extrémité libre un crochet agencé pour se verrouiller à l'arrière du bord libre 143 correspondant de la rainure 141. Ce support 5 comporte en plus un bossage longitudinal 53 parallèle à la patte 52 et agencé pour appuyer sur la face extérieure du bord libre 143. L'intervalle existant entre le bossage 53 et le crochet de la patte 52 est au plus égal à l'épaisseur dudit bord libre 143 de manière à mettre sous contrainte ledit emboîtement. Le support 5 est emboîté dans la rainure 141 du rail horizontal 4 par un mouvement de rotation autour du point ou de la ligne d'appui formé par le bossage 53 en appui sur le rail 4 jusqu'à verrouillage de la patte 52 à l'arrière du bord libre 143, l'extrémité de la patte 51 venant en appui sur le fond de la rainure 141 pour stabiliser la position du support 5 horizontalement par rapport audit rail 4. La forme arrondie et biseautée respectivement des extrémités libres des pattes d'accrochage 51, 52 de même que le chanfrein 144 prévu sur les bords libres 142, 143 de ladite rainure 141 facilitent l'introduction des pattes d'accrochage 51, 52. Pour assurer un assemblage rigide de ces deux pièces et éviter tout risque de déboîtement et de déverrouillage intempestifs, l'écartement extérieur défini par les pattes d'accrochage 51 et 52 est au moins égal et de préférence légèrement supérieur à l'écartement entre les deux bords libres 142, 143 de la rainure 141 mettant sous contrainte ledit emboîtement. La face avant de ce support 5 est normalisée et connue de l'homme de métier étant donné que tous les types d'appareils électriques destinés à être installés dans une armoire électrique comportent en face arrière des formes complémentaires agencées pour coopérer à ledit support 5.

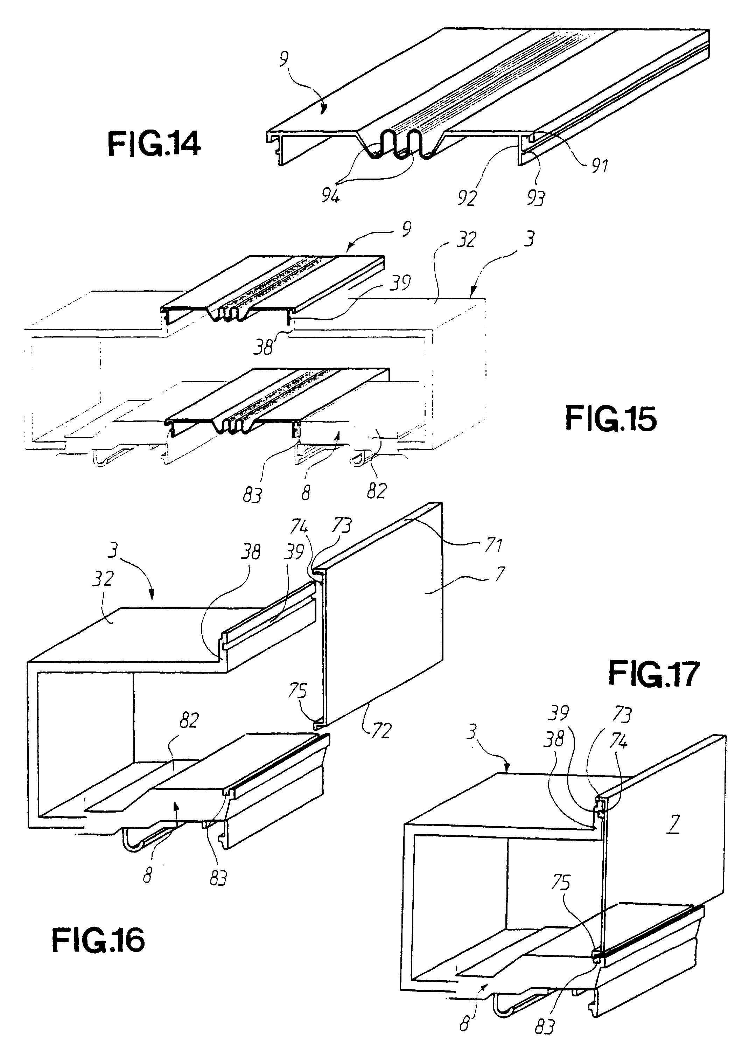

Le peigne pince-fils 6 est représenté par les figures 11 A à D et 12. Ce peigne 6 comporte une pluralité de dents 61 parallèles et espacées à intervalles réguliers solidaires d'un corps longitudinal 62. Chaque dent 61 porte sur ses flancs au moins une et de préférence trois encoches 63, une première encoche prévue à la base et deux autres prévues sur la hauteur de la dent. Ces encoches définissent entre deux dents consécutives des logements pour recevoir des câbles électriques 63' maintenus par pincement. Ce peigne 6 comporte un pied d'accrochage 64 agencé pour se loger dans la rainure 145 en forme de U prévue dans le rail horizontal 4, par emboîtement après une translation du peigne 6 vers le rail horizontal 4 sensiblement perpendiculairement à ladite rainure 145. Ce pied d'accrochage 64, pouvant être longitudinal ou sous la forme de tétons régulièrement répartis, comporte deux languettes parallèles 65, 66 dont l'une porte un cran 67 destiné à s'emboîter dans l'évidement 146 correspondant prévu dans la rainure 145, verrouillant ainsi cet assemblage. Le corps 62 du peigne 6 se prolonge vers l'arrière et se termine par un talon 68 disposé sensiblement à angle droit et destiné à s'emboîter sur un des bords longitudinaux 147 du rail horizontal 4, comme illustré par la figure 12, ou sur les branches 42, 43 dudit rail horizontal 4 s'il présente une largeur moindre. Pour assurer un assemblage rigide de ces deux pièces et éviter tout risque de déboîtement intempestif, l'écartement entre le pied 64 et le talon 68 est au plus égal et de préférence légèrement inférieur à la largeur du bord libre 147 ou des branches 42, 43 mettant sous contrainte ledit emboîtement.

Un capot 10, représenté par la figure 13, est prévu pour coupler deux peignes pince-fils 6 superposés afin d'éviter les intervalles libres. Ce capot 10 comporte un profilé en forme de U dont les branches 11, 12 sont terminées par des nez de verrouillage 13 agencés pour s'emboîter et se verrouiller sur l'extrémité libre des dents 61 en regard. La base 14 du capot 10 se prolonge latéralement au-delà des branches 11, 12 formant une butée qui appuie sur l'arrière desdites dents 61, terminant esthétiquement l'assemblage entre deux peignes 6. Une rainure plate 15 est prévue sur la base 14 du capot 10 et permet de recevoir des étiquettes de repérage pour identifier les appareils électriques portés par ledit châssis 1.

Un couvercle 9, représenté par les figures 14 et 15, permet de relier esthétiquement deux châssis 1 consécutifs en obturant les intervalles vides prévus entre eux. Ce couvercle 9 comporte sur ses bords longitudinaux libres une rainure 91 et une patte d'accrochage 92 sensiblement perpendiculaire à cette dernière, pourvue d'une nervure 93 longitudinale. Un premier couvercle 9 est emboîté sur les extrémités libres des grandes branches 82 des caches isolants 8 et un second couvercle 9 est emboîté sur les extrémités libres recourbées 38 des branches 32 des étriers 3 par une translation des couvercles en direction respectivement des caches isolants 8 et des étriers 3. Dans le premier assemblage, la rainure 91 s'emboîte dans la rainure 83 et la nervure 93 s'emboîte à l'arrière de cette rainure verrouillant ainsi cet assemblage grâce à l'élasticité de la patte d'accrochage 92. Dans le second assemblage, la rainure 91 s'emboîte sur le bord de l'extrémité libre 38 et la nervure 93 s'emboîte dans la rainure 39 verrouillant ainsi cet assemblage grâce à l'élasticité de la patte d'accrochage 92. Ce couvercle 9 comporte dans une zone centrale des ondulations 94 longitudinales et déformables permettant d'adapter la largeur du couvercle 9 à l'intervalle existant entre les deux châssis 1 consécutifs et même de rattraper la différence de niveaux entre ces châssis. Il est réalisé dans une matière synthétique moulée autorisant cette déformation permanente et peut bien sûr s'étendre sur toute la hauteur des châssis 1.

Le flasque latéral 7, représenté par les figures 16 et 17, permet de fermer les flancs du châssis 1 pour obtenir un châssis terminé esthétique. Ce flasque latéral 7 comporte une plaque réalisée en matière synthétique moulée sensiblement rectangulaire, pourvue de deux bords libres longitudinaux 71, 72. Il comporte sur le bord libre 71 une rainure 73 longitudinale et une nervure 74 destinées à s'emboîter respectivement sur le bord libre recourbé 38 et dans la rainure 39 de la branche 32 de l'étrier 3. Il comporte, sur le bord libre 72, une patte 75 longitudinale repliée en L destinée à s'emboîter dans la rainure 83 prévue sur le cache isolant 8. La mise en place de ce flasque latéral 7 est réalisée par translation du flasque en direction de l'étrier et emboîtement du flasque dans les rainures grâce à son élasticité. Ce flasque 7 peut bien sûr s'étendre sur toute la hauteur du châssis 1.

Il ressort clairement de cette description que les différents profilés et différentes pièces composant le châssis sont conçus pour s'assembler aisément sans outillage tout en garantissant une grande rigidité d'assemblage et un support fiable et durable pour les appareils électriques, pour s'adapter et se moduler aux besoins spécifiques de chaque utilisateur, pour pouvoir également se démonter aisément en cas de modification ou de complément, pour coulisser les uns par rapport aux autres et permettre leur positionnement précis, etc. Tous les profilés composant les montants verticaux 2, les étriers 3, les rails horizontaux 4 et les supports 5 sont avantageusement réalisés en aluminium extrudé. Néanmoins, ils pourraient être réalisés également par extrusion en acier, en inox, en alliage d'aluminium, en matière synthétique. Les autres pièces telles que les peignes pince-fils 6, les flasques latéraux 7, les caches isolants 8 et les couvercles 9 sont avantageusement réalisés en matière synthétique moulée.

Modifications et variantes sont possibles dans le cadre des revendications ci-après.

## Revendications

1. Châssis de câblage électrique (1) destiné à recevoir des appareils électriques et leur câblage électrique, ce châssis comportant au moins deux montants verticaux (2) disposés dans des plans parallèles et au moins un rail horizontal (4) couplé aux montants verticaux par au moins deux étriers (3) de forme générale en oméga, la base des étriers déterminant l'écartement du rail horizontal par rapport aux montants verticaux, l'espace intérieur défini par ces étriers étant utilisé comme une goulotte de câbles, le rail horizontal étant pourvu d'un support (5) normalisé destiné à recevoir les appareils électriques et d'au moins un peigne pince-fils (6) disposé parallèlement au support agencé pour fixer en position les câbles électriques connectés auxdits appareils électriques, **caractérisé en ce que** l'assemblage des étriers (3) sur les montants verticaux (2), du rail horizontal (4) sur les étriers, du support (5) et du peigne pince-fils (6) sur le rail horizontal est un assemblage par emboîtement et verrouillage, démontable, les éléments à assembler mutuellement comportant respectivement des moyens d'emboîtement et de verrouillage complémentaires agencés pour coopérer entre eux.

2. Châssis selon la revendication 1, **caractérisé en ce que** les moyens d'emboîtement et de verrouillage complémentaires sont agencés pour coopérer entre eux en rapprochant lesdits éléments selon un mouvement de translation perpendiculaire auxdits éléments.

3. Châssis selon la revendication 1, **caractérisé en ce que** les moyens d'emboîtement et de verrouillage complémentaires sont agencés pour coopérer entre eux en rapprochant lesdits éléments selon un mouvement de rotation.

4. Châssis selon la revendication 3, **caractérisé en ce que** le montant vertical (2) est formé d'un profilé dont un côté comporte sur un des bords un pivot arrondi (21) et sur l'autre bord une rainure (23).

5. Châssis selon la revendication 4, **caractérisé en ce que** le montant vertical (2) présente une section générale sensiblement carrée, symétrique par rapport à un plan médian parallèle audit côté pourvu du pivot et de la rainure.

6. Châssis selon la revendication 4, **caractérisé en ce que** l'étrier (3) comporte, sur sa branche (31) disposée du côté du montant vertical (2), une projection extérieure formant un crochet arrondi (33) agencé pour s'emboîter sur le pivot (21) prévu sur ledit montant vertical (2) et une extrémité libre recourbée vers l'extérieur formant une languette élastique (34) pourvue d'un nez (35) agencé pour se verrouiller dans la rainure (23) prévue sur ledit montant vertical par emboîtement après rotation de l'étrier autour dudit pivot, l'écartement entre le crochet et le nez étant inférieure ou égale à l'écartement entre le pivot et la rainure, l'étrier et/ou le montant vertical comportant, dans la zone d'emboîtement, des reliefs (24, 36) agencés pour former des butées.

7. Chàssis selon la revendication 6, **caractérisé en ce que** l'étrier (3) comporte sur sa branche (31) disposée du côté du montant vertical (2) au moins un trou (37) destiné à recevoir un organe de fixation monté coulissant dans une rainure (25) prévue dans le montant vertical (2) et agencé pour bloquer la position dudit étrier.

8. Châssis selon la revendication 6, **caractérisé en ce que** l'étrier (3) comporte, sur sa branche (32) disposée du côté du rail horizontal (4), une extrémité libre (38) recourbée vers l'extérieur, formant un angle d'environ 90° avec sa branche et pourvue d'une rainure (39).

9. Chàssis selon la revendication 8, **caractérisé en ce que** le rail horizontal (4) est formé d'un profilé comportant en face arrière une rainure (41) longitudinale en forme de C, l'extrémité libre d'une des branches (42) étant recourbée et portant un bourrelet (44) agencé pour s'emboîter sur un premier bord de la branche (32) correspondante dudit étrier et l'extrémité libre de l'autre branche (43) formant une languette élastique pourvue d'un nez (45) agencé pour se verrouiller sur le second bord de la branche (32) correspondante dudit étrier par emboîtement après rotation dudit rail horizontal autour dudit premier bord, l'écartement entre les deux branches de la rainure en forme de C étant au plus égal à la largeur de la branche de l'étrier, l'étrier et/ou le rail horizontal comportant, dans la zone d'emboîtement, des reliefs (46) agencés pour former des butées.

10. Châssis selon la revendication 9, **caractérisé en ce que** le rail horizontal (4) comporte en face avant une rainure (141) longitudinale en forme de T renversé.

11. Châssis selon la revendication 10, **caractérisé en ce que** le support (5) est formé d'un profilé et comporte en face arrière deux pattes d'accrochage élastiques (51, 52) et un bossage (53), les pattes (51, 52) étant agencées pour s'emboîter dans la rainure (141) en forme de T prévue dans la face avant du rail horizontal (4) après un mouvement de rotation autour du bossage (53) en appui sur ledit rail (4), l'extrémité de l'une des pattes (51) étant recourbée pour appuyer sur le fond de la rainure (141) et l'extrémité de l'autre patte (52) ayant un crochet pour se verrouiller à l'arrière du bord libre (143) correspondant de ladite rainure (141), la distance extérieure définie par les deux pattes (51, 52) étant au moins égale à l'écartement entre les deux bords libres (142, 143) de la rainure (141) et la distance entre le bossage (53) et le crochet de la patte (52) étant au plus égale à l'épaisseur dudit bord libre (143).

12. Châssis selon les revendications 2 et 9, **caractérisé en ce que** le rail horizontal (4) comporte, sur ses bords longitudinaux, au moins une rainure (145) longitudinale en forme de U pourvue d'au moins un évidement (146) longitudinal dans une de ses branches et **en ce que** le peigne pince-fils (6) comporte un pied d'accrochage (64) pourvu de deux languettes élastiques (65, 66) dont l'une porte un cran (67) destiné à se verrouiller dans l'évidement (146) longitudinal prévu dans ladite rainure en U par emboîtement du pied après une translation du peigne en direction du rail horizontal.

13. Châssis selon la revendication 12, **caractérisé en ce que** le peigne pince-fils (6) comporte un prolongement arrière (62) terminé par un talon (68) destiné à s'emboîter sur la partie arrière du rail horizontal (4), l'écartement entre le talon (68) et le pied d'accrochage (64) étant inférieure ou égale à la largeur dudit rail dans la zone d'emboîtement.

14. Châssis selon la revendication 13, **caractérisé en ce que** le peigne pince-fils (6) comporte une pluralité de dents (61) parallèles entre elles, chaque dent comportant sur ses flancs au moins une alvéole (63) formant entre deux dents consécutives un logement pour recevoir et maintenir en position un càble électrique (63').

15. Chàssis selon la revendication 8, **caractérisé en ce qu'**il comporte un cache isolant (8) destiné à recouvrir au moins partiellement ledit étrier (3) et comportant au moins une grande branche (82) couplée à la branche (31) disposée du côté du montant vertical (2) et pourvue sur son extrémité libre d'une rainure (83).

16. Châssis selon la revendication 15, **caractérisé en ce qu'**il comporte au moins un couvercle (9) agencé pour recouvrir l'intervalle existant entre deux châssis (1) disposés côte à côté, ledit couvercle comportant sur ses bords longitudinaux au moins une rainure (91) agencée pour s'emboîter sur les extrémités libres correspondantes des branches (32, 82) de l'étrier (3) et du cache isolant (8).

17. Châssis selon la revendication 16, **caractérisé en ce que** le couvercle (9) comporte au moins dans une zone centrale des ondulations (94) longitudinales déformables agencées pour adapter la largeur du couvercle (9) à l'intervalle existant entre les deux châssis (1) et pour rattraper la différence de niveaux entre les deux châssis.

18. Châssis selon la revendication 15, **caractérisé en ce qu'**il comporte au moins un flasque latéral (7) agencé pour fermer les côtés dudit châssis (1), ledit flasque comportant sur ses bords longitudinaux (71, 72) au moins une rainure (73) agencée pour s'emboîter sur les extrémités libres des branches (32, 82) correspondantes de l'étrier (3) et du cache isolant (8).

19. Châssis selon l'une quelconque des revendications précédentes, **caractérisé en ce que** les montants verticaux (2), les rails horizontaux (4), les étriers (3) et les supports (5) sont réalisés par extrusion dans un matériau choisi parmi le groupe comportant de l'aluminium, de l'alliage d'aluminium, de l'inox, de l'acier, des matières synthétiques.

20. Châssis selon l'une quelconque des revendications précédentes, **caractérisé en ce que** les caches isolants (8), les peignes pince-fils (6), les couvercles (9) et les flasques latéraux (7) sont réalisés dans une matière synthétique diélectrique.

## Patentansprüche

1. Rahmen (1) für elektrische Verdrahtung zur Aufnahme von Elektrogeräten und deren elektrischer Verdrahtung, wobei der Rahmen mindestens zwei in parallelen Ebenen angeordnete Vertikalträger (2) und mindestens eine Horizontalschiene (4) aufweist, die mit den Vertikalträgern mittels mindestens zwei im allgemeinen omegaförmigen Bügeln (3) verbunden ist, wobei die Basis der Bügel den Abstand der Horizontalschiene zu den Vertikalträgern definiert und der durch diese Bügel definierte Innenraum als Kabelschacht verwendet wird, wobei die Horizontalschiene mit einem genormten Träger (5) zur Aufnahme der Elektrogeräte, und mit mindestens einer kammförmigen Drahtklemmplatte (6) versehen ist, die parallel zu dem Träger so angeordnet ist, daß sie die mit den Elektrogeräten verbundenen Elektrokabel in ihrer Position fixiert, **dadurch gekennzeichnet, daß** es sich bei der Montage der Bügel (3) auf den Vertikalträgern (2), der Horizontalschiene (4) auf den Bügeln, des Trägers (5) und der kammförmigen Drahtklemmplatte (6) auf der Horizontalschiene um eine demontierbare Montage durch Einpassen und Einrasten handelt, wobei die zu montierenden Elemente gegenseitig jeweils die ergänzenden Einpassungs- und Einrastmittel aufweisen, die so angeordnet sind, daß sie zusammenwirken.

2. Rahmen nach Anspruch 1, **dadurch gekennzeichnet, daß** die ergänzenden Einpassungs- und Einrastmittel so angeordnet sind, daß sie zusammenwirken, indem die Elemente entsprechend einer senkrecht zu den Elementen verlaufenden Translationsbewegung angenähert werden.

3. Rahmen nach Anspruch 1, **dadurch gekennzeichnet, daß** die ergänzenden Einpassungs- und Einrastmittel so angeordnet sind, daß sie zusammenwirken, indem die Elemente entsprechend einer Drehbewegung angenähert werden.

4. Rahmen nach Anspruch 3, **dadurch gekennzeichnet, daß** der Vertikalträger (2) aus einem Profilstahl ausgebildet ist, dessen eine Seite auf einem der Ränder eine runde Drehachse (21), und auf dem anderen Rand eine Nut (23) aufweist.

5. Rahmen nach Anspruch 4, **dadurch gekennzeichnet, daß** der Vertikalträger (2) einen im allgemeinen praktisch quadratischen Querschnitt aufweist, der im Verhältnis zu einer mittleren Ebene symmetrisch ist, die zu der mit der Drehachse und -15- Nut versehenen Seite parallel verläuft.

6. Rahmen nach Anspruch 4, **dadurch gekennzeichnet, daß** der Bügel (3) auf seinem auf der Seite des Vertikalträgers (2) angeordneten Schenkel (31) einen Außenvorsprung aufweist, der einen Rundhaken (33) bildet und so angeordnet ist, daß er die auf dem Vertikalträger (2) vorgesehene Drehachse (21) umschließt, wobei ein freies äußerstes Ende nach außen umgebogen ist und eine elastische Lasche (34) bildet, die mit einer Nase (35) versehen ist, die so angeordnet ist, daß sie nach der Drehung des Bügels um die Drehachse durch Einpassung in der auf dem Vertikalträger vorgesehenen Nut (23) einrastet, wobei der Abstand zwischen dem Haken und der Nase kleiner oder gleich dem Abstand zwischen der Drehachse und der Nut ist, wobei der Bügel und/oder der Vertikalträger in der Einpassungszone Reliefs (24, 36) aufweist, die so angeordnet sind, daß sie Anschläge bilden.

7. Rahmen nach Anspruch 6, **dadurch gekennzeichnet, daß** der Bügel (3) auf seinem auf der Seite des Vertikalträgers (2) angeordneten Schenkel (31) mindestens ein Loch (37) aufweist, das zur Aufnahme eines Befestigungsbauteils bestimmt ist, das in einer in dem Vertikalträger (2) vorgesehenen Nut (25) gleitend montiert und so angeordnet ist, daß es die Position des Bügels arretiert.

8. Rahmen nach Anspruch 6, **dadurch gekennzeichnet, daß** der Bügel (3) auf seinem auf der Seite der Horizontalschiene (4) angeordneten Schenkel (32) ein nach außen umgebogenes freies äußerstes Ende (38) aufweist, das einen Winkel von ungefähr 90° mit dessen Schenkel bildet und mit einer Nut (39) versehen ist.

9. Rahmen nach Anspruch 8, **dadurch gekennzeichnet, daß** die Horizontalschiene (4) aus einem Profilstahl ausgebildet ist, der auf der Rückseite eine C-förmige Längsnut (41) aufweist, wobei das freie äußerste Ende eines der Schenkel (42) umgebogen ist und einen Wulst (44) trägt, der so angeordnet ist, daß er einen ersten Rand des entsprechenden Schenkels (32) des Bügels umschließt, und das freie äußerste Ende des anderen Schenkels (43) eine mit einer Nase (45) versehene elastische Lasche bildet, die so angeordnet ist, daß sie auf dem zweiten Rand des entsprechenden Schenkels (32) des Bügels nach der Drehung der Horizontalschiene um den ersten Rand durch Einpassung einrastet, wobei der Abstand zwischen den zwei Schenkeln der C-förmigen Nut höchstens gleich der Breite des Schenkels des Bügels ist, wobei der Bügel und/oder die Horizontalschiene in der Einpassungszone Reliefs (46) aufweisen, die so angeordnet sind, daß sie Anschläge bilden.

10. Rahmen nach Anspruch 9, **dadurch gekennzeichnet, daß** die Horizontalschiene (4) auf der Vorderseite eine Längsnut (141) in Form eines umgekehrten T aufweist.

11. Rahmen nach Anspruch 10, **dadurch gekennzeichnet, daß** der Träger (5) aus einem Profilstahl ausgebildet ist und auf der Rückseite zwei elastische Einhängklauen (51,52) und einen Buckel (53) aufweist, wobei die Klauen (51,52) so angeordnet sind, daß sie in der T-förmigen Nut (141), die in der Vorderseite der Horizontalschiene (4) vorgesehen ist, nach einer Drehbewegung um den Wulst (53) unter Abstützung auf der Schiene (4) einrasten, wobei das äußerste Ende einer der Klauen (51) umgebogen ist, um sich auf dem Boden der Nut (141) abzustützen und das äußerste Ende der anderen Klaue (52) einen Haken aufweist, um hinten an dem entsprechenden freien Rand (143) der Nut (141) einzurasten, wobei der durch die zwei Klauen (51,52) definierte Außenabstand mindestens gleich dem Abstand zwischen den zwei freien Rändern (142,143) der Nut (141), und der Abstand zwischen dem Buckel (53) der Klaue (52) höchstens gleich der Dicke des freien Randes (143) ist.

12. Rahmen nach Anspruch 2 und 9, **dadurch gekennzeichnet, daß** die Horizontalschiene (4) auf ihren Längsrändern mindestens eine U-förmige Längsnut (145) aufweist, die mit mindestens einer Längsaussparung (146) in einer ihrer Schenkel versehen ist, und die kammförmige Drahtklemmplatte (6) einen mit zwei elastischen Laschen (65,66) versehenen Einhängfuß (64) aufweist, wobei eine davon eine Rastkerbe (67) trägt, die dazu bestimmt ist, durch Einpassung des Fußes nach einer Translationsbewegung des kammförmigen Elementes in Richtung der Horizontalschiene in der Längseinsparung (146) einzurasten, die in der U-förmigen Nut vorgesehen ist.

13. Rahmen nach Anspruch 12, **dadurch gekennzeichnet, daß** die kammförmige Drahtklemmplatte (6) eine hintere Verlängerung (62) aufweist, die durch einen Abschnitt (68) abgeschlossen ist, der dazu bestimmt ist, den hinteren Teil der Horizontalschiene (4) zu umschließen, wobei der Abstand zwischen dem Absatz (68) und dem Einhängfuß (64) kleiner oder gleich der Breite der Schiene in der Einpassungszone ist.

14. Rahmen nach Anspruch 13, **dadurch gekennzeichnet, daß** die kammförmige Drahtklemmplatte (6) eine Vielzahl zueinander parallel angeordneter Zähne (61) aufweist, wobei jeder Zahn auf seinen Flanken mindestens einen Einschnitt (63) aufweist, der zwischen zwei aufeinanderfolgenden Zähnen einen Sitz zur Aufnahme und zum Halten eines Elektrokabels (63') in seiner Position bildet.

15. Rahmen nach Anspruch 8, **dadurch gekennzeichnet, daß** er eine Isolationsabdeckung (8) aufweist, die dazu bestimmt ist, mindestens teilweise den Bügel (3) abzudecken und mindestens einen großen Schenkel (82) aufweist, der mit dem auf der Seite des Vertikalträgers (2) angeordneten Schenkel (31) verbunden, und auf seinem freien äußersten Ende mit einer Nut (83) versehen ist.

16. Rahmen nach Anspruch 15, **dadurch gekennzeichnet, daß** er mindestens einen Deckel (9) aufweist, der so angeordnet ist, daß er den zwischen zwei Seite an Seite angeordneten Rahmen (1) vorhandenen Abstand überdeckt, wobei der Deckel auf seinen Längsrändern mindestens eine Nut (91) aufweist, die so angeordnet ist, daß sie die entsprechenden freien äußersten Enden der Schenkel (32, 82) des Bügels (3) und der Isolationsabdeckung (8) umschließt.

17. Rahmen nach Anspruch 16, **dadurch gekennzeichnet, daß** der Deckel (9) mindestens in einer Zentralzone verformbare Längswellen (94) aufweist, die so angeordnet sind, daß sie die Länge des Deckels (9) an den zwischen den beiden Rahmen (1) vorhandenen Abstand anpassen, und um die Niveauunterschiede zwischen den zwei Rahmen auszugleichen.

18. Rahmen nach Anspruch 15, **dadurch gekennzeichnet, daß** er mindestens eine Seitenblende (7) aufweist, die angeordnet ist, um die Seiten des Rahmens (1) zu schließen, wobei die Blende auf ihren Längsrändern (71,72) mindestens eine Nut (73) aufweist, die so angeordnet ist, daß sie die freien äußersten Enden der entsprechenden Schenkel (32,82) des Bügels (3) und der Isolationsabdeckung (8) umschließt.

19. Rahmen nach einem der vorangegangenen Ansprüche, **dadurch gekennzeichnet, daß** die Vertikalträger (2), die Horizontalschienen (4), die Bügel (3) und die Träger (5) durch Extrudieren eines aus der Gruppe ausgewählten Materials hergestellt sind, die aus Aluminium, Aluminiumlegierungen, rostfreiem Stahl, Stahl, synthetischen Materialien besteht.

20. Rahmen nach einem der vorangegangenen Ansprüche, **dadurch gekennzeichnet, daß** die Isolationsabdeckungen (8), die kammförmigen Drahtklemmplatten (6), die Deckel (9) und die Seitenblenden (7) aus einem dielektrischen synthetischen Material ausgeführt sind.

## Claims

1. Electrical wiring frame (I) designed to house electrical devices and the wiring thereof, comprising at least two vertical members (2) arranged in parallel planes and at least one horizontal rail (4) coupled to the vertical members by at least two generally omega-shaped stirrups (3), the base of the stirrups determining the distance between the horizontal rail and the vertical members, the internal space defined by these stirrups being used as a cable duct, the horizontal rail being provided with a standardized support (5) designed to house the electrical devices and with at least one binding post comb (6) arranged parallel to the support designed to fix in position the electric cables connected to said electrical devices, **characterized in that** the assembly of the stirrups (3) on the vertical members (2), the horizontal rail (4) on the stirrups, the support (5) and the binding post comb (6) on the horizontal rail is achieved by fitting and locking them together in a removable manner, the elements to be assembled together respectively comprising matching fitting and locking means designed to co-operate with one another.

2. Frame according to claim 1, **characterized in that** matching fitting and locking means are arranged to co-operate with one another by bringing said elements together in a movement of translation perpendicular to said elements

3. Frame according to claim 1, **characterized in that characterized in that** matching fitting and locking means are arranged to co-operate with one another by bringing said elements together in a movement of rotation.

4. Frame according to claim 3, **characterized in that** the vertical member (2) is formed by a section, one side of which comprises a rounded pivot (21) on one of the edges and a groove (23) on the other edge.

5. Frame according to claim 4, **characterized in that** vertical member (2) presents a substantially square overall cross-sectional area which is symmetrical in relation to a center plane parallel to said side provided with the pivot and the groove.

6. Frame according to claim 4, **characterized in that** on its branch (31) located on the vertical member (2) side, the stirrup (3) comprises an external projection forming a rounded hook (33) designed to fit onto the pivot (21) provided on said vertical member (2) and an outwardly curved free end forming an elastic tongue (34) provided with a nose (35) arranged to lock into the groove (23) provided on said vertical member by fitting into it after the stirrup has rotated around said pivot, the distance between the hook and the nose being less than or equal to the distance between the pivot and the groove, the stirrup and/or the vertical member comprising reliefs (24, 36) in the interlocking zone, designed to form stops.

7. Frame according to claim 6, **characterized in that** on its branch (31) located on the vertical member (2) side, the stirrup (3) comprises at least one hole (37) designed to receive a fastening device mounted to slide in a groove (25) provided in the vertical member (2) and designed to lock the position of said stirrup.

8. Frame according to claim 6, **characterized in that** on its branch (32) located on the horizontal rail (4) side, the stirrup (3) comprises a free end (38) which is outwardly curved forming an angle of approximately 90° with its branch and is provided with a groove (39).

9. Frame according to claim 8, **characterized in that** the horizontal rail (4) is formed by a section comprising a C-shaped longitudinal groove (41) on its rear face, the free end of one of the branches (42) being curved and having an enlargement (44) designed to fit onto a first edge of the corresponding branch (32) of said stirrup and the free end of the other branch (43) forming an elastic tongue provided with a nose (45) designed to lock onto the second edge of the corresponding branch (32) of said stirrup by fitting onto it after said horizontal rail has rotated around said first edge, the distance between the two branches of the C-shaped groove being at most equal to the width of the stirrup's branch, the stirrup and/or the horizontal rail comprising reliefs (46) in the interlocking zone, designed to form stops.

10. Frame according to claim 9, **characterized in that** the horizontal rail (4) comprises an upside down T-shaped longitudinal groove (141) on the front.

11. , Frame according to claim 10, **characterized in that** the support (5) is formed by a section and on the rear face it comprises two elastic catching tabs (51, 52) and a boss (53), the tabs (51, 52) are arranged to fit into the T-shaped groove (141) provided on the front of the horizontal rail (4) after a rotation around the boss (53) while resting on said rail (4), the end of one of the tabs (51) being curved to rest on the bottom of the groove (141) and the end of the other tab (52) having a hook to lock itself at the rear of the corresponding free end (143) of said groove (141), the outside distance defined by the two tabs (51, 52) being at least equal to the space between the two free edges (142, 143) of the groove (141) and the distance between the boss (53) and the tab's (52) hook being at most equal to the thickness of said free edge (143).

12. Frame according to claims 2 and 9, **characterized in that** the horizontal rail (4) comprises, on its longitudinal edges, at least one U-shaped longitudinal groove (145) provided with at least one longitudinal recess (146) in one of its branches, and the binding post comb (6) comprises a fastening foot (64) provided with two elastic tongues (65, 66) one of which has a notch (67) designed to lock into the longitudinal recess (146) provided in said U-shaped groove by fitting the foot after the binding post comb translates in the direction of the horizontal rail.

13. Frame according to claim 12, **characterized in that** the binding post comb (6) comprises a rear extension (62) ended with a heel (68) designed to fit onto the rear part of the horizontal rail (4), the space between the heel (68) and the fastening foot (64) being less than or equal to the width of said rail in the interlocking zone.

14. Frame according to claim 13, **characterized in that** the binding post comb (6) comprises a plurality of teeth (61) parallel to one another, each of which comprises on its sides at least one cell (63) forming a housing between two consecutive teeth to receive an electrical cable (63') and keep it in position.

15. Frame according to claim 8, **characterized in that** it comprises an insulating cover (8) designed to cover at least partially said stirrup (3), comprising at least one large branch (82) coupled to the branch (31) located on the vertical member (2) side and provided with a groove (83) on its free end.

16. Frame according to claim 15, **characterized in that** it comprises at least one cover (9) arranged to cover the gap between two frames (1) placed side by side, said cover comprising at least one groove (91) on its longitudinal edges, which is designed to fit onto the corresponding free ends of the branches (32, 82) of the stirrup (3) and the insulating cover (8).

17. Frame according to claim 16, **characterized in that** the cover (9) comprises at least in a central zone, deformable longitudinal undulations (94) arranged to adapt the width of the cover (9) to the gap between the two frames (1) and make up the difference in levels between the two frames.

18. Frame according to claim 15, **characterized in that** it comprises at least one side plate (7) arranged to close the sides of said frame (1), said flange comprising on its longitudinal edges (71, 72) at least one groove (73) arranged to fit onto the free ends of the corresponding branches (32, 82) of the stirrup (3) and the insulating cover (8).

19. Frame according to any of the previous claims, **characterized in that** the vertical members (2), the horizontal rails (4), the stirrups (3) and the supports (5) are made by extrusion, from a material chosen from the group which includes aluminum, aluminum alloy, stainless steel, steel and synthetic materials.

20. Frame according to any of the previous claims, **characterized in that** the insulating covers (8), the binding post combs (6), the covers (9) and the side plates (7) are made from a dielectric synthetic material.
